# EUROPEAN PATENT APPLICATION

(11) **EP 4 843 829 A1**
(43) Date of publication of application: **25.11.2026**
(21) Application number: 24918055.5
(22) Date of filing: 28.08.2024
(51) Int. Cl.: B60Q 3/54, B60Q 3/43, B60Q 3/51, B60Q 3/64, B60Q 3/74, B60Q 3/208

(54) **STARLIGHT HEADLINER AND VEHICLE**

(30) Priority: 20.01.2024 CN 202420147096 U
(71) Applicant: BYD Company Limited, Shenzhen, Guangdong 518118 (CN)
(72) Inventor: HE, Jingjing, Shenzhen, Guangdong 518118 (CN); QIN, Qiongbo, Shenzhen, Guangdong 518118 (CN); LAI, Quanfeng, Shenzhen, Guangdong 518118 (CN); HE, Haomin, Shenzhen, Guangdong 518118 (CN); SUN, Shiquan, Shenzhen, Guangdong 518118 (CN)
(74) Representative: Mathys & Squire
(86) International application number: PCT/CN2024/115284
(87) International publication number: WO 2025/152446

(57) **Abstract**

A starlight headliner and a vehicle. The starlight headliner comprises a light guide assembly (3), a light emitting source (4), and fixing assemblies (2). Two first sides of the light guide assembly (3) are each provided with a fixing assembly (2); a first end (211) of each fixing assembly (2) is connected to the roof of the vehicle; an accommodating cavity (5) is formed between second ends (223) of each fixing assembly (2) and the first end (211), the light emitting source (4) is arranged in the accommodating cavity (5), the second end (223) of each fixing assembly (2) is configured to be connected to the light guide assembly (3), and light emitted from the light emitting source (4) enters the light guide assembly (3) from the side face of the light guide assembly (3).

## Description

### CROSS-REFERENCE TO RELATED APPLICATIONS

This application claims priority to Chinese Patent Application No. 202420147096.3 filed on January 20, 2024, which is incorporated herein by reference in its entirety.

### FIELD

The present disclosure relates to the technical field of vehicle lighting, in particular to a starlight headliner and a vehicle.

### BACKGROUND

In certain vehicle models, a starlight headliner includes a light source, a mounting piece, a light transmitting piece, and a fixing piece. The mounting piece is used for mounting a light emitting source, and the fixing piece is used for connecting the light transmitting piece and the vehicle roof.

### SUMMARY

Existing starlight headliners have many component parts and thus have technical problems of low integration.

Therefore, there is a need to design a starlight headliner and a vehicle that solves the technical problems.

The present disclosure provides a starlight headliner comprises a light guide assembly, a light emitting source, and fixing assemblies. Two first sides of the light guide assembly are each arranged with a fixing assembly; a first end of each fixing assembly is connected to the vehicle roof, a second end of each fixing assembly is configured to be connected to the light guide assembly, and an accommodating cavity is formed between the second ends of the fixing assembly and the first ends; the light emitting source is arranged in the accommodating cavity, and light emitted from the light emitting source enters the light guide assembly from a side face of the light guide assembly.

In a first aspect, the starlight headliner provided by the present disclosure includes: a light guide assembly, a light emitting source, and fixing assemblies. Two first sides of the light guide assembly are each arranged with a fixing assembly; a first end of each fixing assembly is connected to the vehicle roof, a second end of each fixing assembly is connected to the light guide assembly, and an accommodating cavity is formed between the second ends and the first ends of the fixing assembly; the light emitting source is arranged in the accommodating cavity, and light emitted from the light emitting source enters the light guide assembly from the side face of the light guide assembly.

Through the above solution, the fixing assemblies of the starlight headliner can be used both for fixing the light guide assembly and for fixing and connecting to the vehicle roof, and even accommodating the light emitting source. Thus, the fixing assemblies are versatile, avoiding the need for a separate light emitting source mounting piece, reducing the number of components required, and thus improving the integration of the starlight headliner.

In a second aspect, the present disclosure also provides a vehicle including the starlight headliner described above.

### BRIEF DESCRIPTION OF THE DRAWINGS

FIG. 1 is a schematic cross-sectional view in the X direction of the starlight headliner according to an embodiment;
FIG. 2 is an exploded structural schematic view of a fixing assembly of the starlight headliner according to an embodiment;
FIG. 3 is a structural schematic view in Y direction of the bent light guide plate according to an embodiment;
FIG. 4 is a structural schematic view in Y direction of the bent pattern plate according to an embodiment;

### Reference Numeral Description:

light guide assembly: 3; pattern plate: 33; bent end: 331; light guide plate: 32; bent end: 321; reflector plate: 31;
light emitting source: 4;
fixing assembly: 2; first end: 211; first connector 21; second end: 212; first end: 221; second connector: 22; first end: 221; third end: 222; second end: 223; second end: 224; third connector: 23; support portion: 231; mounting portion: 233; support portion: 232; groove: 234; protrusions: 226; screw: 25; rivet: 26;
accommodating cavity: 5; decorative plate: 6; limiting portion: 8;
fixing bracket: 7; one end: 71; the other end: 72.

### DETAILED DESCRIPTION

The technical solutions of the present disclosure will be described clearly and completely with reference to the accompanying drawings. Obviously, the described embodiments are only some but not all embodiments of the present disclosure. All other embodiments obtained by a person skilled in the art without inventive step based on the embodiments of the present disclosure fall within the scope of protection of the present disclosure.

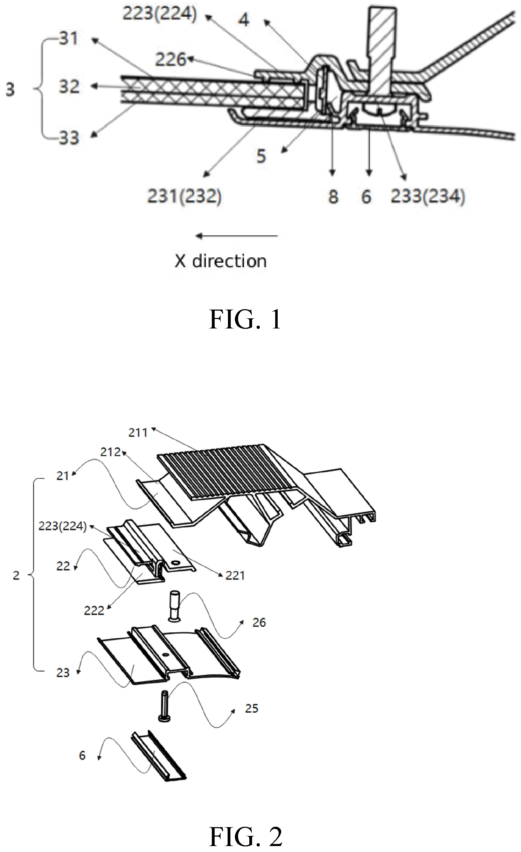

Referring to FIGS. 1 to 4, the present disclosure discloses a first embodiment of a starlight headliner.

Referring to FIGS. 1 and 2, in present embodiment, the starlight headliner includes a light guide assembly 3, a light emitting source 4, and fixing assemblies 2.

Two first sides of the light guide assembly 3 are each arranged with a fixing assembly 2; a first end 211 of each fixing assembly 2 is connected to the vehicle roof; a second end 223 of each fixing assembly 2 is connected to the light guide assembly 3; an accommodating cavity 5 is formed between the second ends 223 and the first ends 211 of the fixing assemblies 2, the light emitting source 4 is arranged in the accommodating cavity 5, and light emitted from the light emitting source 4 enters the light guide assembly 3 from the side face of the light guide assembly 3.

In present embodiment, the two first sides of the light guide assembly 3 are each arranged with a fixing assembly 2, and as will be explained in detail below, one fixing assembly 2 is arranged on each of two sides of the light guide assembly 3 in X direction.

The first end 211 of each fixing assembly 2 is connected to the vehicle roof, and as will be explained in detail below, the first end 211 of each fixing assembly 2 is an overflow groove, which is intended to allow excess adhesive to overflow, so as to ensure that the amount of adhesive in the cavity is just right.

The light source 4, as will be explained in detail below, can be an LED light sheet attached with a dimmer, which can realize the adjustment of warm and cool colors and brightness.

Each fixing assembly 2 of the present embodiment can function to provide fixed connection to the vehicle roof, as well as fixing the light guide assembly 3 and accommodating the light emitting source 4, thus achieving a high degree of integration. The light emitting source 4 is arranged within the accommodating cavity 5 of the fixing assemblies 2 and does not occupy the space on the top of the bus.

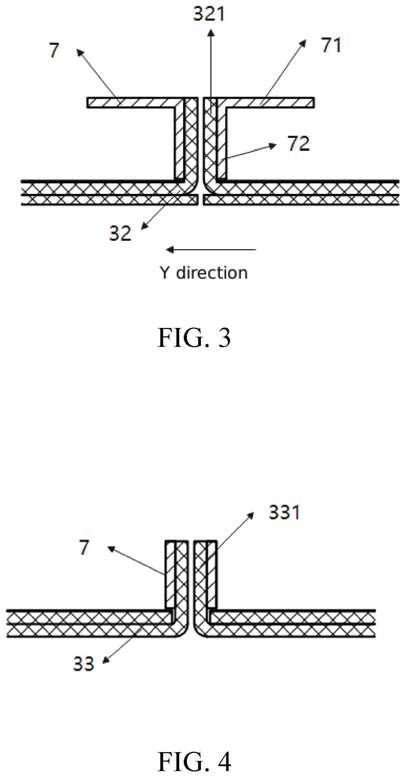

As shown in FIGS. 3 and 4, the starlight headliner further includes fixing brackets 7, and the two second sides of the light guide assembly 3 are each arranged with a fixing bracket 7.

In the present embodiment, one fixing bracket 7 is arranged on each of the two second sides of the light guide assembly 3, and as will be explained in detail below, one fixing bracket 7 is arranged on each of two sides of the light guide assembly 3 in Y direction.

The fixing bracket 7 in present embodiment is arc-shaped, and the light guide assembly 3 is bonded to the arc-shaped bracket on one side along width direction so as to provide an arc-shaped top effect, preventing the light guide assembly 3 from collapsing downward due to its own weight.

As shown in FIGS. 3 and 4, in present embodiment, the light guide assembly 3 includes a pattern plate 33, a light guide plate 32, and a light reflecting plate 31.

The light guide plate 32 is arranged on the pattern plate 33; the light reflecting plate 31 is arranged on the light guide plate 32; one of the pattern plate 33 and the light guide plate 32 is bendable to remove edge shadows of the starlight headliner.

As shown in FIG. 3, the light guide plate 32 is bendable, and in this embodiment, the light guide plate 32 may be made of an acrylic material. Therefore, edges of the light guide plate 32 are thermally bent vertically on either side, and then attached to the vehicle roof.

After the edges of the two light guide plates 32 are thermally bent vertically at the splicing point, the bent part is bonded and fixed to the arc-shaped fixing bracket 7, which not only solves the problem of fixing the starlight headliner to the vehicle roof, but also achieves the removal of shadows, ensuring the stability of the product and the overall aesthetics.

As shown in FIG. 4, the pattern plate 33 is bent, in present embodiment, an edge of the pattern plate 33 is thermally bent vertically, the light guide plate 32 and the light reflecting plate 31 are aligned and held against the pattern plate 33 and are connected to the side of the pattern plate 33 by an adhesive. The upper half part of the light guide plate 32 after being thermally bent is bonded to the fixing bracket 7 of arc-shaped aluminum alloy, so that the light guide plate 32 is maintained in an arc-shaped shape.

The edge of the pattern plate 33 is thermally bent vertically, and the light guide plate 32 and the light reflecting plate 31 are connected on the side by an adhesive. In this manner, display of white tape on the front side is avoided; the light guide plate 32 has a thickness of 3 to 5 mm, has a high strength, is not easily deformed, and can achieve adequate hoisting of the starlight headliner.

The pattern plate 33 on the outermost layer of the light guide assembly 3 of the present embodiment can achieve different pattern effects by different manufacturing processes.

As shown in FIGS. 3 and 4, the fixing bracket 7 is curved towards the vehicle roof, so as to restrict deformation of one of the pattern plate and the light guide plate due to gravity.

As shown in FIG. 3, one end 71 of the fixing bracket 7 is connected to vehicle roof and the other end 72 is connected to the bent end 321 of the light guide plate 32, so that the light guide assembly 3 maintains an arc-shape.

As shown in FIG. 4, the fixing bracket 7 and the bent end 331 of the pattern plate 33 are connected to maintain the light guide assembly 3 in an arc-shape.

As shown in FIG. 2, the fixing assembly includes a first connector 21, a first end 211 of the first connector 21 being connected to the vehicle roof; a second connector 22, the accommodating cavity 5 being formed between a first end 221 and a second end 224 of the second connector 22, and the second end 224 of the second connector 22 being connected to the light guide assembly 3; a third connector 23, the first end 221 of the second connector 22 being connected to the third connector 23 and a second end 212 of the first connectors 21, respectively.

In the present embodiment, the first end 211 of the first connector 21 is connected to the vehicle roof, and as will be explained in detail below, it is connected by an adhesive.

The first end 221 of the second connector 22 is connected to the third connector 23 and the second end 212 of the first connectors 21, respectively, and as will be explained in detail below, the first end 221 of the second connector 22 and the third connector 23 are connected by a screw 25.

The first end 221 of the second connector 22 and the second end 212 of the first connector 21 are connected by a rivet 26.

The first connector 21, the second connector 22 and the third connector 23 in the present embodiment are aluminium alloy profiles, when maintenance is required, detach the screw 25 firstly, and then remove the third connector 23. This does not affect the fixed relationship between the first connector 21, the second connector 22 and the light guide assembly 3. Next, the light guide assembly 3 and the light emitting source 4 are detached in sequence, and then the rivet 26 is detached and finally the second connector 22 is removed. This construction design facilitates maintenance and repair of the interior of the starlight headliner, and has advantages of simple assembly and disassembly and overall aesthetic appearance.

As shown in FIG. 1, the third connector 23 includes a mounting portion 233 and a support portion 232; the mounting portion 233 is connected to the first end 221 of the second connector 22 and the support portion 232 is configured to support a third end 222 of the second connector 22.

The support portion 232 of third connector 23 in this embodiment is to further improve the support strength of the third end 222 of the second connector 22, making the light guide assembly 3 more securely fixed.

As shown in FIG. 1, the mounting portion 233 is a groove 234, a top of the groove 234 is connected to the first end 221 of the second connector 22, and a bottom opening of the groove 234 is arranged with a decorative plate 6.

The decorative plate 6 in this embodiment makes vehicle interior space more aesthetically pleasing.

As shown in FIG. 2, a limiting portion 8 is arranged between the mounting portion and the support portion of the third connector 23.

The limiting portion 8 in this embodiment abuts against the light emitting source 4 to prevent the light emitting source 4 from shaking.

As shown in FIG. 2, protrusions 226 are arranged on an end surface of the second end 224 of the second connector 22.

In this embodiment, the protrusions 226 are two and may be provided in a plurality.

It will be noted that, the terminology used herein is only for the purpose of describing particular embodiments, but not intended to limit the exemplary embodiments according to the present disclosure. As used herein, the singular forms are intended to include the plural forms as well, unless the context clearly indicates otherwise. In addition, it will be understood that when the terms "include" and/or "comprise" are used in this specification, they specify the presence of features, steps, operations, devices, components, and/or combinations thereof.

Unless otherwise specifically stated, the relative arrangement, numerical expressions, and numerical values of components and steps set forth in these embodiments do not limit the scope of the present disclosure. At the same time, it will be understood that for ease of description, dimensions of various parts illustrated in the accompanying drawings are not drawn according to actual scale. Techniques, methods, and devices known to those of ordinary skill in the relevant art may not be discussed in detail. But where appropriate, the techniques, methods, and devices will be considered part of an authorized specification. In all examples shown and discussed herein, any specific values will be interpreted as merely exemplary, not as limitations. Therefore, other examples of exemplary embodiments can have different values. It will be noted that similar reference numerals and letters represent similar items in the following figures, and therefore, once an item is defined in one figure, further discussion thereof is not required in a subsequent figure.

In the description of the present disclosure, it will be understood that the orientation or positional relationships indicated by words such as "front, back, up, down, left, right", "lateral, vertical, perpendicular, horizontal", "top, bottom", and the like are generally based on the orientation or positional relationships shown in the accompanying drawings, and only for purpose of facilitating the description of the disclosure and simplifying the description. Unless otherwise stated, these words do not indicate and imply that the device or element referred to must have a particular orientation or be constructed and operated in a particular orientation, and therefore cannot be construed as limiting the scope of protection of the disclosure; the phrase "inner, outer" means in and out with respect to the outline of the respective component itself.

For ease of description, spatially relative terms may be used herein, such as "on", "above", "on the upper surface of......", "overlying", and the like, to describe the spatial positional relationship of one device or feature to other devices or features as illustrated in the figures. It will be understood that spatial relative terms are intended to include different orientations of the device in use or operation in addition to the orientation depicted in the figures. For example, if the device in the figures is inverted, then devices described as "above" or "over" other devices or configurations would then be positioned "below" or "under" the other devices or configurations. Therefore, the exemplary term "above" may include both an orientation "above" and "below". The device may also be otherwise differently positioned (rotated 90 degrees or at other orientations) and the spatially relative descriptors used herein interpreted accordingly.

In addition, it will be noted that the terms "first", "second", etc. are used to define parts merely to facilitate distinguishing corresponding components, and unless otherwise stated, the terms do not have a special meaning and therefore are not to be construed as a limitation on the scope of protection of the present disclosure.

The above description is merely illustrative of the preferred embodiments of the present disclosure and is not intended to limit the present disclosure, and it will be apparent to those skilled in the art that various modifications and variations can be made. Any modifications, equivalents, improvements, etc., which are within the spirit and principles of the present disclosure, are intended to be included within the scope of the present disclosure.

## Claims

1. A starlight headliner comprising:
a light guide assembly (3), a light emitting source (4), and fixing assemblies (2),
two first sides of the light guide assembly (3) each being arranged with a fixing assembly (2);
a first end of each fixing assembly (2) being connected to a vehicle roof;
a second end of each fixing assembly (2) being connected to the light guide assembly (3); an accommodating cavity (5) being formed between the second ends and the first ends of the fixing assemblies (2), the light emitting source (4) being arranged in the accommodating cavity (5), and the light emitted from the light emitting source (4) entering the light guide assembly (3) from a side face of the light guide assembly (3).

2. The starlight headliner according to claim 1, further comprising:
fixing brackets (7), two second sides of the light guide assembly (3) each being arranged with a fixing bracket (7).

3. The starlight headliner according to claim 2, wherein the light guide assembly (3) comprises:
a pattern plate (33);
a light guide plate (32) arranged on the pattern plate (33);
a light reflecting plate (31) arranged on the light guide plate (32);
one of the pattern plate (33) and the light guide plate (32) being bendable to remove edge shadows of the starlight headliner.

4. The starlight headliner according to claim 3, the fixing bracket (7) being curved towards the vehicle roof for restricting deformation of one of the pattern plate (33) and the light guide plate (32) due to gravity.

5. The starlight headliner according to one of claims 1 to 4, wherein the fixing assembly (2) comprises:
a first connector (21), a first end of which being connected to the vehicle roof;
a second connector (22), the accommodating cavity (5) being formed between a first end and a second end of the second connector (22), and the second end of the second connector (22) being connected to the light guide assembly (3);
a third connector (23), the first end of the second connector (22) being connected to the third connector (23) and a second end of the first connector (21), respectively.

6. The starlight headliner according to claim 5, the third connector (23) comprising a mounting portion (233) and a support portion (232);
wherein the mounting portion (233) being connected to the first end of the second connector (22) and the support portion (232) being configured to support a third end of second connector (22).

7. The starlight headliner according to claim 6, wherein:
the mounting portion (233) being a groove (234), a top of the groove (234) being connected to the first end of the second connector (22), and a bottom opening of the groove (234) being arranged with a decorative plate (6).

8. The starlight headliner according to claim 6, a limiting portion (8) being arranged between the mounting portion (233) and the support portion (232) of the third connector (23).

9. The starlight headliner according to claim 5, protrusions (226) being arranged on an end surface of the second end of the second connector (22).

10. The starlight headliner according to any of claims 1 to 9, the first end of each fixing assembly (2) being an overflow groove.

11. The starlight headliner according to any of claims 1 to 9, the light emitting source (4) comprising a LED light sheet.

12. The starlight headliner according to any of claims 2 to 9, the fixing bracket (7) being arc-shaped.

13. The starlight headliner according to any of claims 3 to 9, the light guide plate (32) being made of an acrylic material.

14. The starlight headliner according to any of claims 3 to 9, wherein a thickness of the light guide plate (32) being 3mm to 5 mm.

15. The starlight headliner according to any of claims 5 to 9, the first end of the second connector (22) and the third connector (23) being connected by a screw.

16. The starlight headliner according to any of claims 5 to 9, the first end of the second connector (22) and the second end of the first connector (21) being connected by a rivet.

17. The starlight headliner according to any of claims 5 to 9, the first connector (21), the second connector (22) and the third connector (23) being aluminium alloy profiles.

18. A vehicle comprising the starlight headliner of one of claims 1 to 17.
